# EUROPEAN PATENT APPLICATION

(11) **EP 2 650 808 A1**
(43) Date of publication of application: **16.10.2013**
(21) Application number: 11846999.8
(22) Date of filing: 02.08.2011
(51) Int. Cl.: G06F 21/00

(54) **METHOD FOR INTEGRATING ACCOUNT MANAGEMENT FUNCTION IN INPUT METHOD SOFTWARE**

(30) Priority: 06.12.2010 CN 201010574253
(71) Applicant: Intsig Information Co., Ltd., Shanghai 200433 (CN)
(72) Inventor: LI, Pingxin, Shanghai 200433 (CN); CAO, Chaoyang, Shanghai 200433 (CN); LI, Shiyi, Shanghai 200433 (CN)
(74) Representative: Carpintero Lopez, Francisco
(86) International application number: PCT/CN2011/077913
(87) International publication number: WO 2012/075816

(57) **Abstract**

A method for integrating an account management function in input method software includes the following steps: setting account information of one or more services on a setting interface of an input method (S11); setting a verification manner for reading each piece of account information on the setting interface of the input method, the set verification manner is bound to an original account verification manner (S12); using a service A, starting the input method on a login interface, and selecting an account information item of the service A on a password management interface of the input method (S21); and inputting a verification code, where after verification succeeds, an account name and password of the service A are read and submitted to the login interface of a program of the service A (S22). Through the method, an account password can be safely saved, and the account password can be input conveniently and quickly.

## Description

### Background of the Present Invention

### Field of Invention

The present invention belongs to the field of computer software technologies, relates to an account management method and specifically to a method for integrating an account management function in input method software.

### Description of Related Arts

With the development of hardware technologies, various mobile devices are affecting people's lives. Nowadays, mobile phones almost become indispensable products in people's daily lives. MIDs and small tablet computers are entering public life. Correspondingly, various software services and network service layers emerge in an endless stream. People need to input account passwords when using mobile devices such as mobile phones to access mails, websites, and IM software and log in to services such as an online bank, Alipay, and Paypal. For security, people generally set different passwords for different accounts, but lots of passwords are easily confused and even forgotten.

Account password management software in the mobile device can assist in saving account passwords, but an account name and password still cannot be conveniently input into a text box on the mobile device when the account password is required.

An input method is very important software in a mobile device, especially in a mobile device without a hard keyboard. The input method is used to provide input manners such as letters, numbers, symbols, Pinyin, and strokes for a user. When inputting characters into a mobile device, input method software is almost always required.

### Summary of the Present Invention

The technical problem to be solved in the present invention is to provide a method for integrating an account management function in input method software, which can safely save an account password and input the account password conveniently and quickly.

In order to solve the technical problem, the present invention adopts the following technical solutions:
A method for integrating an account management function in input method software comprises the following steps:
   - steps of adding account information, comprises:
      step 101: adding account information of a service A on a setting interface of an input method, and
      step 102: setting a verification manner for reading the account information on the setting interface of the input method; and
   - steps of reading the account information, comprises:
      step 201: using the service A, starting the input method on a login interface, and selecting an account information item of the service A on a password management interface of the input method, and
      step 202: inputting a verification code, reading an account name and password of the service A, and submitting the account name and password to the login interface of a program of the service A.

As a preferred implementation of the present invention, in step 101, input method software is started during normal input, or started as a response to a command sent by a user, and the user enters the setting interface; on the setting interface, the user adds account name and account password information of the service A to an account list.

As a preferred implementation of the present invention, in step 102, for rapidly inputting the account name and password through the input method, verification is required; after the user adds the account information of the service A, an identity verification manner is required to be set;
after the verification manner is set, the account information of the service A can be read only after identity verification succeeds, the set identity verification manner is bound to an original account verification manner, wherein
the identity verification manner comprises one or more of the following manners:
manner 1: the user sets several characters as a verification password,
manner 2: the user draws a picture in a screen area, and the input method software saves information such as a picture track of the picture drawn by the user and drawing speed as a verification password, and
manner 3: biometric features recognition, comprising voice recognition and/or fingerprint recognition, is used; and
the user sets one verification manner for saved account information of all services, or uses different verification manners for some services.

As a preferred solution of the present invention, in step 201, the user starts the service A, and on the login interface, the user is required to input the account name and account password of the service A; and
in this case, a button on an input method interface is started to enter a password input mode; in this mode, a list of all account information set by the user is displayed; the user clicks the account information item of the service A, and a corresponding verification interface is displayed.

As a preferred solution of the present invention, in step 202, the user inputs verification information, wherein after identity verification succeeds, the account name and password of the service A are submitted to the login interface of the program of the service A; and
in step 202, different verification interfaces are displayed according to identity verification manners set when the user saves the account information:
interface 1: if the user sets several characters such as letters and numbers as the verification password, a keyboard with characters such as letters and numbers is displayed for the user to input verification code information,
interface 2: if the user selects a picture drawing manner to set the verification code, a picture drawing area is displayed, and the user touches a screen to draw a picture to perform identity verification, and
interface 3: a voice input interface or fingerprint input interface is displayed to acquire verification information of the user.

As a preferred solution of the present invention, in step 202, if the user fails in identity verification, the account information of the service A will not be submitted to the login interface of software of the service A; if the user fails in identity verification multiple times in a row, input method software will refuse the user to read the account information of the service A again.

A method for integrating an account management function in input method software comprises the following steps:
- steps of setting account information, comprises:
   step S11: setting account information of one or more services on a setting interface of an input method, and
   step S12: setting a verification manner for reading each account information on the setting interface of the input method, the set verification manner being bound to an original account verification manner; and
- steps of reading the account information, comprises:
   step S21: using a service A, starting the input method on a login interface, and selecting the account information item of the service A on a password management interface of the input method, and
   step S22: inputting a verification code, wherein after verification succeeds, the account name and password of the service A are read and submitted to the login interface of a program of the service A.

As a preferred solution of the present invention, in step S11, input method software is started during normal input, or started as a response to a startup command sent by a user, and the user enters the setting interface; on the setting interface, the user adds account name and account password information of the services to an account list and can modify or delete the account name and account password information;
in step S12, for rapidly inputting the account name and password through the input method, verification is required; after the user adds the account information of the service A, an identity verification manner is required to be set;
after the verification manner is set, the account information of the service A can be read only after identity verification succeeds, the set identity verification manner is bound to an original account verification manner, wherein
the identity verification manner comprises one or more of the following manners:
manner 1: the user sets several characters as a verification password,
manner 2: the user draws a picture in a screen area, and the input method software saves information such as a picture track of the picture drawn by the user and a drawing speed as a verification password, and
manner 3: biometric features recognition, comprising voice recognition and/or fingerprint recognition, is used;
the user sets one verification manner for saved account information of all services, or uses different verification manners for some services;
in step S21, the user starts the service A, and on the login interface, the user is required to input the account name and account password of the service A;
in this case, a button on an input method interface is started to enter a password input mode; in this mode, a list of all account information set by the user is displayed; the user clicks the account information item of the service A, and a corresponding verification interface is displayed;
in step S22, the user inputs verification information, wherein after identity verification succeeds, the account name and password of the service A are submitted to the login interface of the program of the service A;
in step S22, different verification interfaces are displayed according to identity verification manners set when the user saves the account information:
interface 1: if the user sets several characters such as letters and numbers as the verification password, a keyboard with characters such as letters and numbers is displayed for the user to input verification code information,
interface 2: if the user selects a picture drawing manner to set the verification code, a picture drawing area is displayed, and the user touches a screen to draw a picture to perform identity verification, and
interface 3: a voice input interface or fingerprint input interface is displayed to acquire verification information of the user;
in step S22, if the user fails in identity verification, the account information of the service A will not be submitted to the login interface of software of the service A; and
if the user fails in identity verification multiple times in a row, the input method software will refuse the user to read the account information of the service A again.

The technical solutions to be adopted by the present invention comprise:
an input method, supporting letter, number, and symbol input or Pinyin, strokes, and handwriting input manners, and supporting user-defined display of an input interface to display an account list, and account decryption, which requires a mobile device to support screen touch input;
an encryption/decryption technology, used to encrypt account information stored by a user, and decrypt the account information when the user reads the account information;
an identity verification technology, wherein when a user reads account information, a verification code needs to be input or a picture needs to be drawn to perform identity verification, so as to prevent others from reading the account information; and
local storage, used to save encrypted account information of a user in a file manner or other manners such as a database.

The beneficial effects of the present invention are that, in the method for integrating an account management function in input method software provided in the present invention, account management and an input method are integrated, thereby achieving the purpose of safely saving and rapidly inputting a password. Account information of all services may be added in the input method. When logging in to a service, a user can input an account name and account password of the service into a login box of a program of the service through direct clicks in the input method. A verification manner for reading account information can be set through the integrated input method. The account information can be read only after verification succeeds. The verification manner may be a conventional sequence of several characters or a manner of touching a screen to draw a picture, so as to ensure the safety of the account information.

### Brief Description of the Drawings

Fig. 1 is a flow chart of steps of setting account information in a method according to the present invention.
Fig. 2 is a flow chart of steps of reading the account information in the method according to the present invention.
Fig. 3 is a flow chart of a method according to Embodiment 2 of the present invention.

### Detailed Description of the Preferred Embodiments

Preferred embodiments of the present invention are described in detail in the following with reference to accompanying drawings.

### Embodiment 1

Disclosed in the present invention is a method for adding an account management function in input method software, which enables a user to rapidly add, modify, or delete a set of account passwords, provides a function of encrypting and saving the account passwords, and when a user accesses a service requiring account password information, performs verification and implements a function of rapidly inputting an account and a password. The method is supposed to help a user to save account password information and rapidly input the account password information.

The present invention may be applied to mobile terminals such as a mobile phones and Mid, and definitely, may also be applied to a PC or any other electronic device.

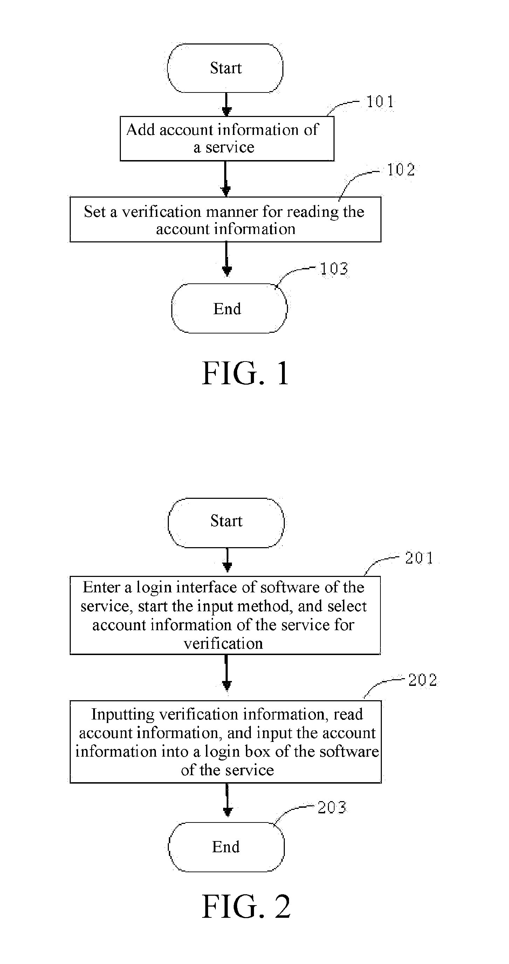

Referring to Fig. 1 and Fig. 2, disclosed in the present invention is a method for integrating an account management function in input method software, where the method includes the following steps:
[operation 1] steps of adding account information, including:
   step 101: a user adds account information of a service A on a setting interface of an input method,
   step 102: a user sets a verification manner for reading the account information on the setting interface of the input method, and
   step 103: the procedure ending, wherein
   in step 101, an input method program can be started during normal input, and the user may also start the input method by other means and enter the setting interface of the input method; on the setting interface, the user can add information such as the account name and an account password of the service A to an account list,
   in step 102, when the user rapidly inputs the account name and password through the input method, verification is required, so as to prevent anyone from reading the stored account information when the mobile phone is lost; for this reason, after the user adds the account information of the service A, the user is required to set an identity verification manner; after the verification manner is set, the user can read the account information of the service A only after identity verification succeeds, where, the following identity verification manners may exist:
   manner 1: the user sets several characters including letters and numbers as a verification code,
   manner 2: the user draws a picture in a screen area, and the input method program saves information such as a picture track of the picture drawn by the user and a drawing speed as a verification code, and
   manner 3: other manners, such as voice recognition and fingerprint recognition, and
   the user may set one verification manner for saved account information of all services, and may also use different verification manners for some services; for example, a more complex verification manner is set for a back account; and
[operation 2] steps of reading account information, including:
   step 201: the user uses the service A, starting the input method on a login interface, and selecting an account information item of the service A on a password management interface of the input method,
   step 202: the user inputs a verification code, reading the account name and password of the service A, and submitting the account name and password to the login interface of a program of the service A, and
   step 203: the procedure ends, wherein
   in step 201, the user starts the service A, and on the login interface, the user is required to input the account name and account password of the service A; in this case, the user can start a button on an input method interface (generally, the input method interface is automatically displayed in the mobile device when the focus falls in a text entry box of the account name or password) to enter a password input mode; in this mode, a list of all account information set by the user is displayed; the user clicks the account information item of the service A, and a corresponding verification interface is displayed,
   in step 202, the user inputs verification information, after the identity verification succeeds, the account name and password of the service A may be submitted to the login interface of the program of the service A,
   in step 202, different verification interfaces are displayed according to identity verification manners set when the user saves the account information:
   interface 1: if the user sets several characters such as letters and numbers as the verification code, a keyboard with characters such as letters and numbers is displayed for the user to input verification code information,
   interface 2: if the user selects a picture drawing manner to set the verification code, a picture drawing area is displayed, and the user touches a screen to draw a picture to perform identity verification, and
   interface 3: a voice input interface or fingerprint input interface may be displayed to acquire verification information of the user,
   in step 202, if the user fails in identity verification, the account information of the service A will not be submitted to the login interface of software of the service A, and
   in step 202, if the user fails in identity verification multiple times in a row, the input method software may refuse the user to read the account information of the service A again.

To sum up, in the method for integrating an account management function in input method software provided by the present invention, account management and an input method are integrated, thereby achieving the purpose of safely saving and rapidly inputting a password. Account information of all services may be added in the input method. When logging in to a service, a user can input an account name and account password of the service into a login box of a program of the service through direct clicks in the input method. A verification manner for reading account information can be set through the integrated input method. The account information can be read only after verification succeeds. The verification manner may be a conventional sequence of several characters or a manner of touching a screen to draw a picture, so as to ensure the safety of the account information.

### Embodiment 2

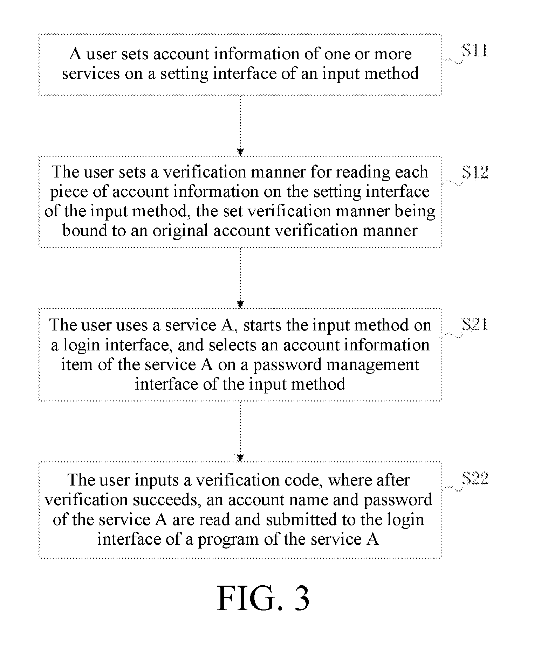

Referring to Fig. 3, a method for integrating an account management function in input method software includes the following steps:
[steps of setting account information]
   steps of setting account information, including:
   step S11: a user sets account information of one or more services on a setting interface of an input method,
   step S12: the user sets a verification manner for reading each account information on the setting interface of the input method, the set verification manner being bound to an original account verification manner, wherein
   in step S 11, input method software is started during normal input, or the user starts the input method by sending a startup command and enters the setting interface; on the setting interface, the user adds account name and account password information of the services to an account list and can modify or delete the account name and account password information,
   in step S12, when the user rapidly inputs an account name and password through the input method, verification being required; after the user adds account information of a service A, the user is required to set an identity verification manner; after the verification manner is set, the account information of the service A can be read only after identity verification succeeds, the set identity verification manner is bound to the original account verification manner, wherein
   the identity verification manner is one or more of the following manners:
   manner 1: the user sets several characters as a verification password,
   manner 2: the user draws a picture in a screen area, and the input method software saves information such as a picture track of the picture drawn by the user and a drawing speed as a verification password, and
   manner 3: biometric features recognition, including voice recognition and fingerprint recognition, is used, and
   the user sets one verification manner for saved account information of all services, or uses different verification manners for some services; and
[steps of reading the account information]
   steps of setting account information, including:
   step S21: the user uses the service A, starts the input method on a login interface, and selects an account information item of the service A on a password management interface of the input method, and
   step S22: the user inputs a verification code, where after verification succeeds, an account name and password of the service A are read and submitted to the login interface of a program of the service A, wherein
   in step S21, the user starts the service A, and on the login interface, the user is required to input the account name and account password of the service A; in this case, a button on an input method interface is started to enter a password input mode; in this mode, a list of all account information set by the user is displayed; the user clicks the account information item of the service A, and a corresponding verification interface is displayed,
   in step S22, the user inputs verification information, and after identity verification succeeds, the account name and account password of the service A is submitted to the login interface of the program of the service A; in step S22, different verification interfaces are displayed according to identity verification manners set when the user saves the account information:
   interface 1: if the user sets several characters such as letters and numbers as the verification password, a keyboard with characters such as letters and numbers is displayed for the user to input verification code information,
   interface 2: if the user selects a picture drawing manner to set the verification code, a picture drawing area is displayed, and the user touches a screen to draw a picture to perform identity verification, and
   interface 3: a voice input interface or fingerprint input interface is displayed to acquire verification information of the user, and
   in step S22, if the user fails in identity verification, the account information of the service A will not be submitted to the login interface of software of the service A; if the user fails in identity verification multiple times in a row, input method software refuses the user to read the account information of the service A again.

Here, the description and embodiments of the present invention are for illustrative purpose, and not intended to limit the scope of the present invention to the embodiments. Variations and changes to the embodiments disclosed here may be possible. Replacements of the embodiments and various equivalent members are well known by persons of ordinary skill in the art. Persons skilled in the art should understand that, the present invention can be implemented with other forms, structures, arrangements, proportions, components, materials, and members without departing from the spirit or essential features of the present invention. The embodiments disclosed herein can be varied and changed without departing from the scope and spirit of the present invention.

## Claims

1. A method for integrating an account management function in input method software, comprises the following steps:
steps of adding account information, comprises:
step 101: adding account information of a service A on a setting interface of an input method, and
step 102: setting a verification manner for reading the account information on the setting interface of the input method; and
steps of reading the account information, comprises:
step 201: using the service A, starting the input method on a login interface, and selecting an account information item of the service A on a password management interface of the input method, and
step 202: inputting a verification code, wherein after verification succeeds, an account name and password of the service A are read and submitted to the login interface of a program of the service A, wherein
in step 101, input method software is started during normal input, or started as response to the startup command sent by a user, and the user enters the setting interface; on the setting interface, the user adds account name and account password information of the service A to an account list,
in step 102, for rapidly inputting the account name and password through the input method, verification is required; after the user adds the account information of the service A, an identity verification manner is required to be set,
after the verification manner is set, the account information of the service A can be read only after identity verification succeeds, the set identity verification manner being is to an original account verification manner, wherein
the identity verification manner comprises one or more of the following manners:
manner 1: the user sets several characters as a verification password,
manner 2: the user draws a picture in a screen area, and the input method software saves information such as a picture track of the picture drawn by the user and a drawing speed as a verification password, and
manner 3: biometric features recognition, comprising voice recognition and/or fingerprint recognition, is used,
the user sets one verification manner for saved account information of all services, or uses different verification manners for some services,
in step 201, the user starts the service A, and on the login interface, the user is required to input the account name and account password of the service A,
in this case, a button on an input method interface is started to enter a password input mode; in this mode, a list of all account information set by the user is displayed; the user clicks the account information item of the service A, and a corresponding verification interface is displayed,
in step 202, the user inputs verification information, after identity verification succeeds, the account name and password of the service A are submitted to the login interface of the program of the service A,
in step 202, different verification interfaces are displayed according to identity verification manners set when the user saves the account information:
interface 1: if the user sets several characters such as letters and numbers as the verification password, a keyboard with characters such as letters and numbers is displayed for the user to input verification code information,
interface 2: if the user selects a picture drawing manner to set the verification code, a picture drawing area is displayed, and the user touches a screen to draw a picture to perform identity verification, and
interface 3: a voice input interface or fingerprint input interface is displayed to acquire verification information of the user,
in step 202, if the user fails in identity verification, the account information of the service A will not be submitted to the login interface of software of the service A, and
if the user fails in identity verification multiple times in a row, the input method software refuses the user to read the account information of the service A again.

2. A method for integrating an account management function in input method software, comprises the following steps:
steps of adding account information, comprises:
step 101: adding account information of a service A on a setting interface of an input method, and
step 102: setting a verification manner for reading the account information on the setting interface of the input method; and
steps of reading the account information, comprising:
step 201: using the service A, starting the input method on a login interface, and selecting an account information item of the service A on a password management interface of the input method, and
step 202: inputting a verification code, reading an account name and password of the service A, and submitting the account name and password to the login interface of a program of the service A.

3. The method for integrating an account management function in input method software as in claim 2, wherein
in step 101, the input method software is started during normal input, or started as a response to a startup command sent by a user, and the user enters the setting interface; on the setting interface, the user adds account name and account password information of the service A to an account list.

4. The method for integrating an account management function in input method software as in claim 2, wherein
in step 102, for rapidly inputting the account name and password through the input method, verification is required; after the user adds the account information of the service A, an identity verification manner is required to be set,
after the verification manner is set, the account information of the service A can be read only after identity verification succeeds, the set identity verification manner is bound to an original account verification manner, wherein
the identity verification manner comprises one or more of the following manners:
manner 1: the user sets several characters as a verification password,
manner 2: the user draws a picture in a screen area, and the input method software saves information such as a picture track of the picture drawn by the user and a drawing speed as a verification password, and
manner 3: biometric features recognition, comprising voice recognition and/or fingerprint recognition, is used, and
the user sets one verification manner for saved account information of all services, or uses different verification manners for some services.

5. The method for integrating an account management function in input method software as in claim 2, wherein
in step 201, the user starts the service A, and on the login interface, the user is required to input the account name and account password of the service A; and
in this case, a button on an input method interface is started to enter a password input mode; in this mode, a list of all account information set by the user is displayed; the user clicks the account information item of the service A, and a corresponding verification interface is displayed.

6. The method for integrating an account management function in input method software as in claim 2, wherein
in step 202, the user inputs verification information, wherein after identity verification succeeds, the account name and password of the service A are submitted to the login interface of the program of the service A; and
in step 202, different verification interfaces are displayed according to identity verification manners set when the user saves the account information:
interface 1: if the user sets several characters such as letters and numbers as the verification password, a keyboard with characters such as letters and numbers is displayed for the user to input verification code information,
interface 2: if the user selects a picture drawing manner to set the verification code, a picture drawing area is displayed, and the user touches a screen to draw a picture to perform identity verification, and
interface 3: a voice input interface or fingerprint input interface is displayed to acquire verification information of the user.

7. The method for integrating an account management function in input method software as in claim 2, wherein
in step 202, if the user fails in identity verification, the account information of the service A will not be submitted to the login interface of software of the service A; and
if the user fails in identity verification multiple times in a row, the input method software refuses the user to read the account information of the service A again.

8. A method for integrating an account management function in input method software, comprises the following steps:
steps of setting account information, comprises:
step S11: setting account information of one or more services on a setting interface of an input method, and
step S12: setting a verification manner for reading each piece of account information on the setting interface of the input method, the set verification manner being bound to an original account verification manner; and
steps of reading the account information, comprises:
step S21: using the service A, starting the input method on a login interface, and selecting an account information item of the service A on a password management interface of the input method, and
step S22: inputting a verification code, wherein after verification succeeds, an account name and password of the service A are read and submitted to the login interface of a program of the service A.

9. The method for integrating an account management function in input method software as in claim 8, wherein
in step S11, input method software is started during normal input, or started as response to the startup command sent by a user, and the user enters the setting interface; on the setting interface, the user adds account name and account password information of the services to an account list and can modify or delete the account name and account password information;
in step S12, for rapidly inputting the account name and password through the input method, verification is required; after the user adds the account information of the service A, an identity verification manner is required to be set;
after the verification manner is set, the account information of the service A can be read only after identity verification succeeds, the set identity verification manner is bound to an original account verification manner, wherein
the identity verification manner comprises one or more of the following manners:
manner 1: the user sets several characters as a verification password,
manner 2: the user draws a picture in a screen area, and the input method software saves information such as a picture track of the picture drawn by the user and a drawing speed as a verification password, and
manner 3: biometric features recognition, comprising voice recognition and/or fingerprint recognition, is used;
the user sets one verification manner for saved account information of all services, or uses different verification manners for some services;
in step S21, the user starts the service A, and on the login interface, the user is required to input the account name and account password of the service A;
in this case, a button on an input method interface is started to enter a password input mode; in this mode, a list of all account information set by the user is displayed; the user clicks the account information item of the service A, and a corresponding verification interface is displayed;
in step S22, the user inputs verification information, wherein after identity verification succeeds, the account name and password of the service A are submitted to the login interface of the program of the service A;
in step S22, different verification interfaces are displayed according to identity verification manners set when the user saves the account information:
interface 1: if the user sets several characters such as letters and numbers as the verification password, a keyboard with characters such as letters and numbers is displayed for the user to input verification code information,
interface 2: if the user selects a picture drawing manner to set the verification code, a picture drawing area is displayed, and the user touches a screen to draw a picture to perform identity verification, and
interface 3: a voice input interface or fingerprint input interface is displayed to acquire verification information of the user;
in step S22, if the user fails in identity verification, the account information of the service A will not be submitted to the login interface of software of the service A; and
if the user fails in identity verification consecutively multiple times, the input method software refuses the user to read the account information of the service A again.
